# EUROPÄISCHE PATENTSCHRIFT

(11) **EP 2 323 806 B1**
(45) Veröffentlichungstag und Bekanntmachung des Hinweises auf die Patenterteilung: **08.02.2012**
(21) Anmeldenummer: 09744031.7
(22) Anmeldetag: 04.09.2009
(51) Int. Cl.: B23Q 5/04, B23Q 11/10

(54) **EINWECHSELAGGREGAT MIT MINIMALMENGENSCHMIERUNG, VORRICHTUNG UND VERFAHREN**
EXCHANGE ASSEMBLY HAVING MINIMUM VOLUME LUBRICATION, DEVICE, AND METHOD
GROUPE INTERCHANGEABLE DE LUBRIFICATION À QUANTITÉS MINIMALES, DISPOSITIF ET PROCÉDÉ CORRESPONDANTS

(30) Priorität: 07.09.2008 DE 102008045863
(43) Veröffentlichungstag der Anmeldung: 25.05.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2009/001251
(87) Internationale Veröffentlichungsnummer: WO 2010/025716

(56) Entgegenhaltungen:
- EP-A- 1 188 514
- WO-A-2006/009184
- DE-A1- 3 447 932
- JP-A- 3 142 144

## Beschreibung

Die Erfindung betrifft ein Einwechselaggregat mit mindestens einem in einem Gehäuse gelagerten und über mindestens ein Getriebe angetriebenen, werkzeugtragenden Werkzeughalter, wobei Teile des Getriebes, Teile des Werkzeughalters und das Werkzeug selbst Kanäle oder Bohrungen zum Transport eines unter Druck stehenden kühlenden und/oder schmierenden Flüssigkeits-Gasgemisches aufweisen und wobei das Flüssigkeits-Gasgemisch dem Einwechselaggregat durch eine Flüssigkeits-Gasgemischzuleitung zugeführt wird.

In zerspanenden Werkzeugmaschinen werden zur Kühlung und zur Schmierung oft noch reine Kühl- und Schmiermittelflüssigkeiten benutzt. So ist aus der JP 03 142144 A ein Einwechselaggregat bekannt, bei dem über die werkzeugtragende Spindel eine Kühl- und/oder Schmiermittelflüssigkeit dem Werkzeug zugeführt wird.

Um jedoch den Kühl- und Schmiermittelbedarf zu reduzieren, wird bereichsweise der Flüssigkeit, z.B. Öl, Druckluft beigemengt. Wird nun die Flüssigkeit entsprechend in einer Düse zerstäubt und in einer Mischzone Druckluft zugeführt, kann ein Ölnebel mit z.B. mikrometergroßen Öltröpfchen entstehen. Die Kühl- und Schmierwirkung solcher Ölnebel oder Aerosole ist so effektiv, dass der Flüssigkeitsanteil auf eine Minimalmenge pro Zeiteinheit reduziert werden kann.

Werden diese Aerosole jedoch bei der sogenannten inneren Kühlung eingesetzt, besteht die Gefahr, dass von dem Öl-Luft-Gemisch bei der Durchschleusung durch das Einwechselaggregat und das Werkzeug an den vielen Querschnittsänderungen und Umlenkungen der Aerosolströmung ein Teil des Öls an Kanal- und Bohrungswandungen sowie in Totwasserzonen ausgeschieden wird und somit nicht mehr gleichförmig an den Werkzeugschneiden zur Verfügung steht.

Der vorliegenden Erfindung liegt das Problem zugrunde, ein Einwechselaggregat und ein Verfahren für eine Minimalmengenschmierung der werkzeugseitigen Zerspanstelle zu entwickeln, bei dem das Flüssigkeits-Gasgemisch an der Zerspanstelle eine bestimmte Schmiermittelsättigung nicht unterschreitet.

Das Problem wird mit den Merkmalen des Anspruchs 1 gelöst. Dazu ist im oder vor dem Werkzeughalter eine Mischkammer oder eine Mischzone angeordnet, in die die Flüssigkeits-Gasgemischzuleitung mündet. Im Gehäuse ist ein mit Schmier- und/oder Kühlflüssigkeit befüllter Behälter angeordnet, dessen Flüssigkeitszuführleitungen, die durch den Druck des Flüssigkeits-Gasgemisches geöffnet werden können, in oder vor der Mischkammer oder Mischzone enden.

Nach Anspruch 11 wird dem von der Werkzeugmaschine angelieferten Flüssigkeits-Gasgemisch eine aus einem gehäuseeigenen Behälter zur Verfügung gestellte Schmier- und/oder Kühlflüssigkeit beigemengt. Dabei ist der Volumenstrom der dem Werkzeug zugeführten Schmier- und/oder Kühlflüssigkeit - also nur der flüssige Anteil - kleiner als 200 Milliliter pro Stunde.

Mit der Erfindung wird ein Einwechselaggregat und ein verfahren zur Minimalmengenschmierung zur Verfügung gestellt, bei dem dem "Ausbluten" des Flüssigkeits-Gasgemisches bzw. des Aerosols durch ein zusätzliches zerstäubendes Beimengen einer kühlenden und/oder schmierenden Flüssigkeit entgegengewirkt wird.

Nach jedem Einwechseln und Inbetriebnehmen des Einwechselaggregats wird aus einem im Gehäuse untergebrachten Flüssigkeitsbehälter eine kleine Menge in den von der Werkzeugmaschine gelieferten Aerosolstrom fein zerstäubt eingesprüht. Die Bohrungen und Kanäle des Werkzeugs liefern das neue, ölangereicherte Aerosol an die gewünschte Zerspanstelle.

Nach Abschluss des aggregateseitigen Bearbeitungsvorgangs wird das Einwechselaggregat wieder in einem Werkzeugmagazin abgelegt. Während des Ein- und Auswechselvorgangs sowie während der Lagerung im Werkzeugmagazin, ist der Flüssigkeitsbehälter - unabhängig von der Lage des Einwechselaggregats - dauerhaft schmiermitteldicht verschlossen.

Weitere Einzelheiten der Erfindung ergeben sich aus den Unteransprüchen und der nachfolgenden Beschreibung einer schematisch dargestellten Ausführungsform.
- Figur 1:: Einwechselaggregat in perspektivischer Ansicht;
- Figur 2:: Längsschnitt durch das Einwechselaggregat;
- Figur 3:: Längsschnitt senkrecht zum Schnitt nach Figur 2;
- Figur 4:: Ausschnitt zu Figur 2, jedoch mit unbetätigtem Schließventil;
- Figur 5:: Draufsicht auf das Einwechselaggregat;
- Figur 6:: Schrägschnitt B-B zu Figur 5;
- Figur 7:: Vergrößerter Ausschnitt zu Figur 6.

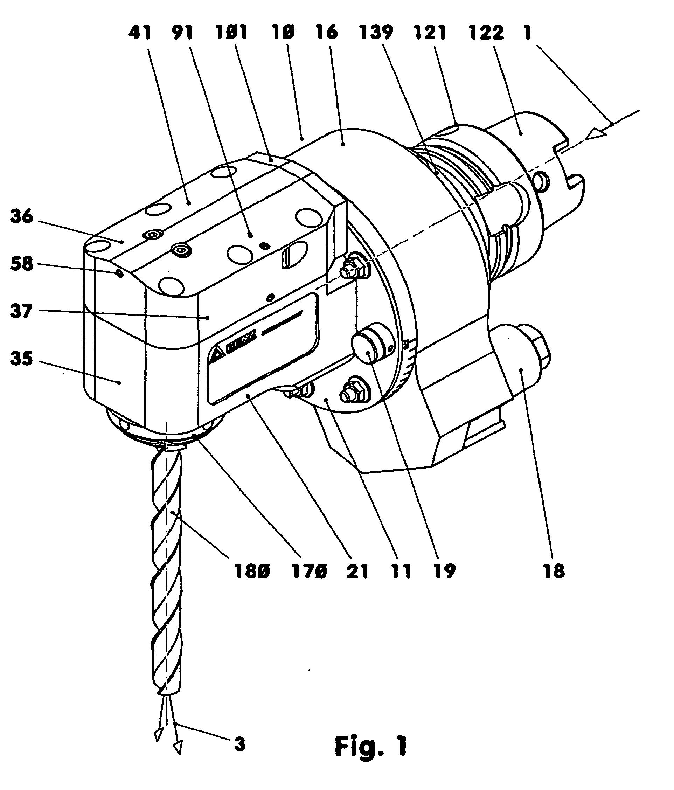

Die Figur 1 zeigt ein einspindeliges Einwechselaggregat mit einem eingespannten, innen gekühlten Spiralbohrer als Werkzeug (180). Anstelle des Spiralbohrers (180) können auch Fräser, Senker und dergleichen vom Einwechselaggregat aufgenommen werden.

Das Einwechselaggregat hat hier ein zweistufiges Getriebe (120), das in einem mehrteiligen Gehäuse (10) untergebracht ist. An der das Einwechselaggregat tragenden Werkzeugmaschine ist das Einwechselaggregat über einen Adapterkonus (122) seiner Aggregatespindel (121) eingesteckt. Am Gehäuse (10) befindet sich ein Flanschring (16), der einen zur Aggregatespindel (121) parallelen Abstützbolzen (18) trägt. Letzterer stützt sich zudem an der Werkzeugmaschine ab.

Das Gehäuse (10) besteht aus einem Grundkörper (11), einem Tankaufsatz (41) mit einem Tank (42) und zwei Ventilen (60, 80), einem Tankdeckel (101) und einem Ringdeckel (105). Der Grundkörper (11) ist im Wesentlichen ein Rohrabschnitt (14), der in einen schmäleren Quaderabschnitt (21) übergeht. Der Rohrabschnitt (14) hat vor dem Übergang zum Quaderabschnitt (21) einen Flansch (15), an dem der Flanschring (16) mittels eines Montagerings (17) festgeklemmt ist. Der Flanschring (16) umgibt dabei den Rohrabschnitt (14) großteils. Auf dem Quaderabschnitt (21) sitzt der Tankaufsatz (41). Das z.B. zweistufige räumliche Getriebe (120) umfasst ein antreibendes Planrad (124), ein Zwischenrad (142) und ein Abtriebsrad (153).

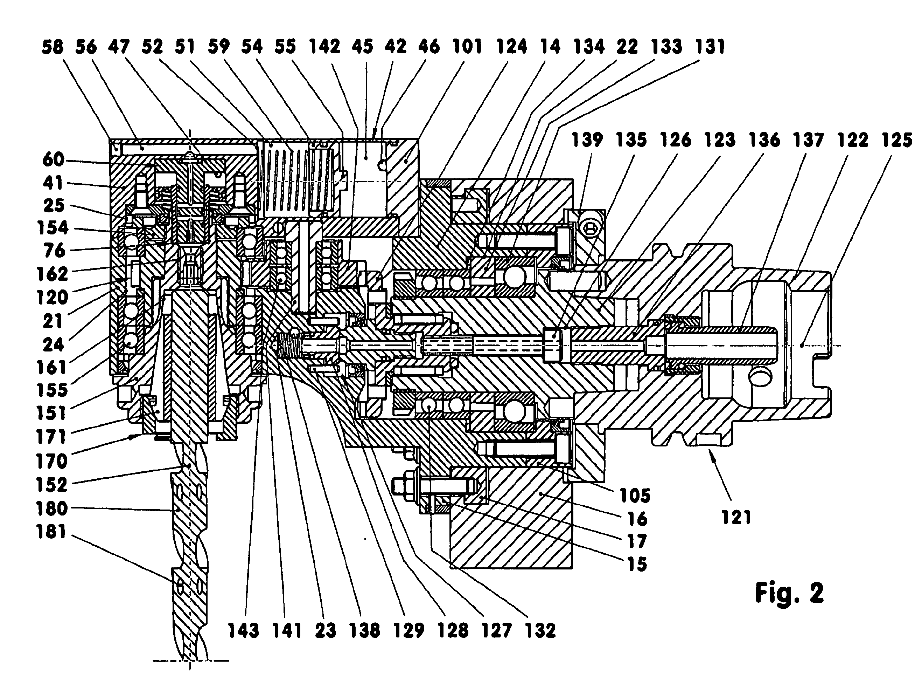

Das antreibende Planrad (124) ist ein drehfestes Bestandteil einer Aggregatespindel (121), die sich zudem aus einer Lagerwelle (123) und dem Adapterkonus (122) zusammensetzt, vgl. Figur 2.

Die Lagerwelle (123) bildet das mittlere Teilstück der Aggregatespindel (121). Sie lagert zwischen einem Wellenbund und einer Wellenmutter drei Schulterlager (131, 132), zwei kleinere (132) und ein größeres (131). Letztere sitzen in einer zentralen Stufenbohrung (22) des Rohrabschnittes (14). Hierbei ist das größere Schulterlager (131) zwischen einem Gehäusebund des Rohrabschnittes (14) und dem Ringdeckel (105) axial verspannt. Zwischen dem Außenring des großen Schulterlagers (131) und dem Gehäusebund befinden sich eine Distanzhülse (133) und eine Distanzscheibe (134). Mit Hilfe der Distanzscheibe (134) wird das Verzahnungsspiel zwischen dem Planrad (124) und dem Zwischenrad (142) durch ein genaues Positionieren der gesamten Aggregatespindel (121) eingestellt.

Die Lagerwelle (123) hat eine mehrfach gestufte Durchgangsbohrung (126), die sich beidseitig aufweitet. Nach Figur 2 sitzt in der linken Aufweitung das Planrad (124) mit seinem Wellenansatz. Zur Drehmomentübertragung trägt der Wellenansatz zwei einander gegenüberliegende Passfedern, die in entsprechende Nuten der Aufweitung eingreifen. Auch das Planrad (124) hat, nach Figur 2, eine Durchgangsbohrung, in deren Gewindeabschnitt eine Hohlschraube (135) steckt, über die das Planrad (124) mit der Lagerwelle (123) verschraubt ist.

Den vorderen Abschnitt der Aggregatespindel (121) bildet der Adapterkonus (122). Letzterer sitzt axial verspannt auf einem an der Lagerwelle (123) angeformten Konus. Die axiale Verspannung übernimmt eine Hohlschraube (136). Nach Figur 2 ist rechts vor der Hohlschraube (136) im Adapterkonus (122) ein Aerosolanschlussrohr (137) gas- und flüssigkeitsdicht befestigt.

Der Quaderabschnitt (21) des Gehäuses (10) hat in seinem linken Bereich eine mehrfach gestufte Stufenbohrung (24), deren Mittellinie (152) quer zur Mittellinie (125) der Aggregatespindel (121) orientiert ist. In der Stufenbohrung (24) ist über drei z.B. gleich große Schulterlager (155) eine Abtriebswelle (151) wälzgelagert angeordnet. Auf dem hinteren Teil der Abtriebswelle (151) sitzt, axial fixiert über eine Wellenmutter (154), das Abtriebsrad (153). Zur Drehmomentübertragung zwischen Abtriebsrad (153) und Abtriebswelle (151) dienen zwei einander gegenüberliegende Passfedern (156).

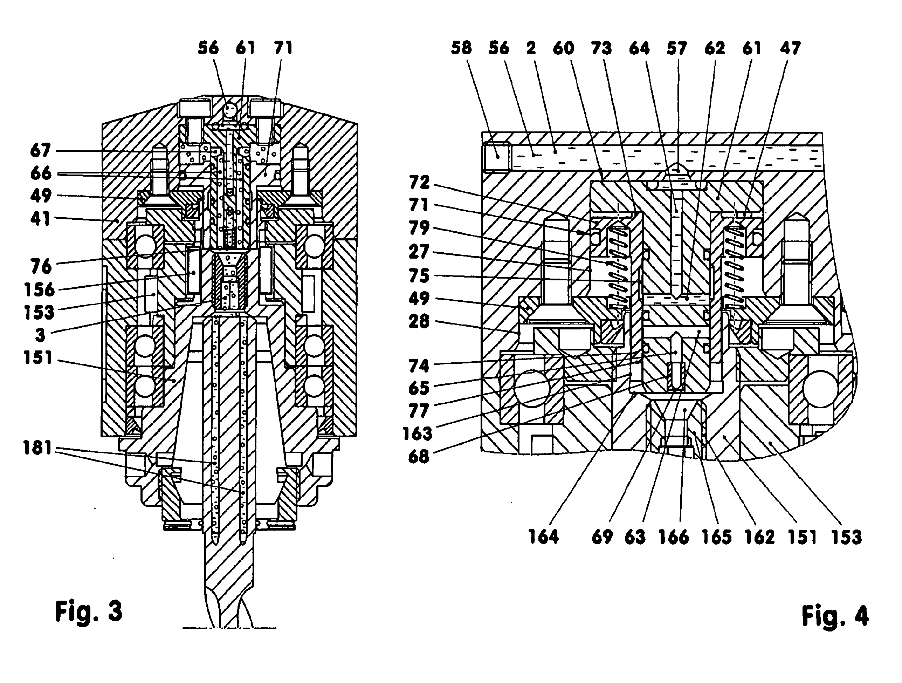

Die Abtriebswelle (151) hat eine zentrale Bohrung (161), in deren vorderen, konischen Bereich eine Spannzange (170) sitzt, in der im Ausführungsbeispiel ein Spiralbohrer (180) einspannt ist. Im hinteren Bereich hat die Bohrung (161), anschließend an den konischen Bereich, einen Gewindeabschnitt (162) und eine Ventilausdrehung (163), vgl. Figur 4. Im Gewindeabschnitt (162) ist eine Mischkammer (165) eingeschraubt. Letztere hat auf ihrer, dem Werkzeug (180) abgewandten Seite bereichsweise eine kegelstumpfmantelförmige Bohrungsaufweitung (166). Die Ventilausdrehung (163) ist gegenüber dem Gewindeabschnitt (162) mit einem planen Dichtbund (164) abgegrenzt.

Zwischen dem Planrad (124) und dem Abtriebsrad (153) kämmt das im Quaderabschnitt (21) gelagerte Zwischenrad (142). Seine Mittellinie liegt parallel zur Mittellinie (152). Die Mittellinien aller drei Zahnräder (124, 142, 153) liegen in einer Ebene. Das Zwischenrad (142) sitzt über zwei Rillenkugellager (143) auf einer hohlen Zwischenwelle (141), die zwischen dem Quaderabschnitt (21) und dem Tankaufsatz (41) in kurzen Sacklochbohrungen gelagert ist.

Zur Realisierung einer Minimalmengenschmierung oder ggf. auch einer Mindermengenkühlschmierung wird zunächst ein Flüssigkeits-Gasgemisch (1), im Folgenden Aerosol genannt, durch das Einwechselaggregat gefördert. Der Flüssigkeitsanteil des Aerosolvolumenstroms beträgt beispielsweise 5 bis 150 Milliliter Schmierstoff pro Prozessstunde. Das Aerosol (1) wird vorn am Adapterkonus (122) in das Aerosolanschlussrohr (137) eingespeist und an den endseitigen Öffnungen (183) des Spiralbohrers (180) als fein zerstäubter Ölnebel freigesetzt.

Dazu strömt das Aerosol (1) zunächst über die Bohrungen der Hohlschrauben (135, 136) und der Aggregatespindel (121) bis zum Planrad (124) vor. Zwischen dem rotierenden Planrad (124) und dem ortsfesten Quaderabschnitt (21) des Gehäuses (10) ist zur gasdichten Überleitung des Aerosols (1) eine Gleitringdichtung (127) angeordnet. Das rotierende Teil der Gleitringdichtung (127) ist in die Durchgangsbohrung des Planrades (124) eingeschraubt. Das gehäuseseitige, stehende Teil (128) der Gleitringdichtung (127) sitzt im Endstück (23) der Stufenbohrung (22) längsverschiebbar und verdrehgesichert zwischen zwei Zapfen (129). Es wird mittels der Schraubendruckfeder (138) dicht gegen das rotierende Teil gepresst.

Vom Endstück (23) aus wird das Aerosol (1) über Bohrungen und/oder Kanäle an drei Orte im Tankaufsatz (41) verteilt. Diese Orte sind der Tank (42) und die beiden Ventile (60) und (80).

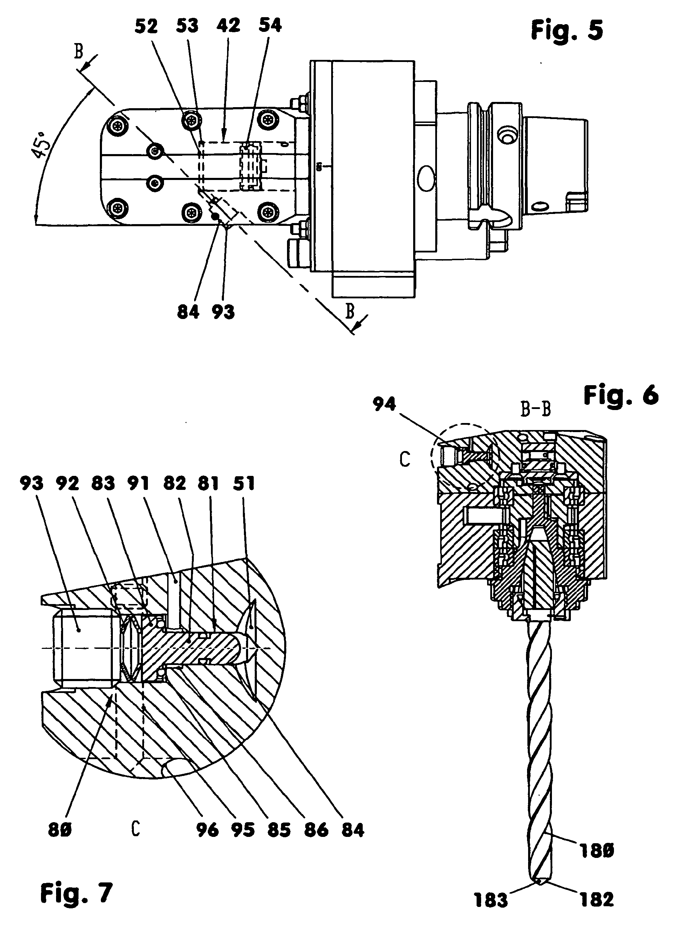

Der Tankaufsatz (41) ist ein quaderförmiges Bauteil, in dem im Wesentlichen der Tank bzw. Behälter (42), die zwei Ventile (60, 80) und mehrere aerosol- und flüssigkeitsführende Bohrungen angeordnet sind. Der Tank (42) ist in derjenigen Hälfte des Tankaufsatzes (41) angeordnet, die dem Rohrabschnitt (14) des Gehäuses (10) zugewandt ist. Die Lage des Tanks (42) ist in Figur 5 gestrichelt dargestellt. Der Tank (42) ist beispielsweise eine zylindrische Ausdrehung, die zum Rohrabschnitt (14) hin mit einem Tankdeckel (101) dicht verschlossen ist. Nach Figur 5 hat der Tank (42) eine Befüllbohrung (56), deren Mittellinie hier parallel zur Mittellinie des Tanks (42) angeordnet ist. Die Befüllbohrung (56) endet an der vorderen Stirnseite (35) des Gehäuses (10). Dort ist die Befüllbohrung (56) mit einem Gewindestopfen (58) dicht verschlossen, vgl. auch Figur 1.

In der Nähe des Tankdeckels (101) mündet in den Tank (42) eine aerosolführende Bohrung (46), die über weitere Bohrungen oder Kanäle mit dem Endstück (23) der Stufenbohrung (22) verbunden ist, vgl. Figur 2. Im Tank (42) sitzt ein Schwimmkolben (54), der den Tank (42) in einen Aerosolraum (45) und einen Ölraum (51) trennt. Im Ölraum (51) befindet sich zwischen dem Tankboden (52) und dem Schwimmkolben (54) eine Schraubendruckfeder (59). Letztere schiebt zumindest zum Befüllen des Tanks (42) mit flüssigem Schmier- und/oder Kühlmittel (2) den Schwimmkolben (54) gegen den Tankdeckel (101). Damit der gegenüber der Innenwandung des Tanks (42) radial abgedichtete Schwimmkolben (54) nicht die Bohrung (46) verschließen kann, hat der Schwimmkolben (54) einen kurzen Anschlagzapfen (55). Beispielsweise weist die Innenwandung des Tanks (42) im Bereich des Tankbodens (52) einen Ringkanal (53) auf, dessen Durchmesser größer ist als der Durchmesser der übrigen Tankinnenwandung.

Anstelle des beschriebenen Tanks (42), der beispielsweise ein Volumen von 13 bis 30 Milliliter fasst, kann der Behälter auch als Blasenspeicher aufgebaut sein. In diesem Fall wird der Schwimmkolben (54) durch eine Membrane ersetzt.

Nach den Figuren 5, 6 und 7 ist im Tankaufsatz ein Öffnungsventil (80) angeordnet, dessen Ventilglied (81) durch den Schwimmkolben (54) betätigt wird, wenn sich z.B. bei fast entleertem Tank (42) der Schwimmkolben (54) dem Tankboden (52) auf wenige zehntel Millimeter nähert. Das Ventilglied (81), vgl. Figur 7, hat einen Schaftabschnitt (82) und einen Kopfabschnitt (83). Der zylindrische Schaftabschnitt (82), der in einer Ringnut einen Dichtring trägt, sitzt in einer Stufenbohrung (84), die schräg in den Ölraum (51) im Bereich des Ringkanals (53) mündet, vgl. Figur 5. An seinem freien Ende ist der Schaftabschnitt (82) halbkugelförmig abgerundet.

Die Stufenbohrung (84) hat einen planen, ventilsitzartigen Absatz (85), an dem - bei geschlossenem Öffnungsventil (80) - der Kopfabschnitt (83) des Ventilglieds (81) mit seiner axialen Dichtung anliegt. In dieser Position wird das Ventilglied (81) durch Tellerfedern (92) gehalten, die sich wiederum an einem Gewindestopfen (93) abstützen.

Im Bereich des Absatzes (85) weist die Stufenbohrung (84) eine Eindrehung (86) auf, in die eine Abblasbohrung (91) mündet. Nach Figur 7 liegt hinter den Tellerfedern (92) eine Durchdringungskontur (94). Sie ist in Figur 6 besser sichtbar, da dort die Tellerfedern (92) nicht eingezeichnet sind. Die Durchdringungskontur (94) gehört zu einer Bohrung (95), die u.a. über die Bohrung (96) mit dem Endstück (23) der Stufenbohrung (22) in Verbindung steht.

Figur 7 zeigt das Ventilglied (81) in geöffnetem Zustand. Demnach ist der Tank (42) fast leer. Über die Bohrungen (95, 96), die Durchdringungskontur (94) und die Stufenbohrung (84) strömt das Aerosol (1) am Kopfabschnitt (83) des Ventilglieds (81) vorbei und über die Abblasbohrung (91) ins Freie. Dadurch fällt - bei leerem oder fast leerem Tank (42) - an der werkzeugmaschinenseitigen Aerosolpumpe der überwachte Aerosoldruck ab. Der Druckabfall wird als Signal für einen leeren Tank (42) interpretiert.

Im vorderen Bereich des Tankaufsatzes (41) setzt sich die vertikale Bohrung (24) des Grundkörpers (11) als Bohrung (25) fort. Die Bohrung (25) hat dort einen Ventilbereich (27) und einen Deckelbereich (28), vgl. Figur 4, wobei der Deckelbereich (28) einen größeren Durchmesser als der Ventilbereich (27) hat. Im Zentrum des Ventilbereichs (27), der einen planen Boden hat, befindet sich ein Durchbruch (57), der die Befüllbohrung (56) mit dem Ventilbereich (27) verbindet. Am Boden ist ein Verteilerzapfen (61) mit seinem flanschartigen Fuß über zwei Schrauben angeschraubt, vgl. Figur 3.

Nach Figur 4 hat der Verteilerzapfen (61) zwei Querbohrungen (62, 63) und zwei zentrale Längsbohrungen (64, 65). Die erste Längsbohrung (64) verbindet den Durchbruch (57) mit der ersten Querbohrung (62). Die zweite Längsbohrung (65), in derem freien Ende ein Düsenelement (68) eingepresst ist, mündet in die zweite Querbohrung (63). Hierzu um 90 Winkelgrade versetzt, verlaufen im Verteilerzapfen (61) nach Figur 3 zwei au-βermittige Bohrungen (66), die am freien - hier unteren - Ende des Verteilerzapfens (61) enden. Das jeweils andere Ende der einzelnen Bohrungen (66) geht jeweils in eine kurze Querbohrung (67) über, die jeweils vor dem Fuß des Verteilerzapfens (61) im Ventilbereich (27) mündet.

Das Düsenelement (68) ist z.B. eine Büchse mit einer kurzen, zylindrischen Düse (69), deren Durchmesser z.B. 0,01 Millimeter beträgt.

Im Ventilbereich (27) ist auf dem Verteilerzapfen (61) der Kolbenschieber (71) des Schließventils (60) längsverschiebbar gelagert. Der Kolbenschieber (71) hat einen Kolben (72), der abgedichtet an der zylindrischen Wandung des Ventilbereichs (27) anliegt. Kolbenbodenseitig hat der Kolben (72) einen erhabenen ringförmigen Anschlag (73), dessen Durchmesser um ca. 50% kleiner ist als der des Kolbens (72). In den dort vorhandenen Spaltraum mündet eine Bohrung (47), die mit dem Endstück (23) der Stufenbohrung (22) in Verbindung steht. Die hohle Schieberstange (74) des Kolbenschiebers (71) liegt mit ihrer Bohrung radial am Verteilerzapfen (61) an. Die Bohrung hat eine ringkanalartige Ausdrehung (75), die nach den Figuren 2 und 3 die beiden parallelen Querbohrungen (62, 63) miteinander verbindet.

Die plane Stirnfläche (77) der Schieberstange (74) bildet die Dichtfuge einer Gleitringdichtung (76), die die rotierende Abtriebswelle (151) gegenüber dem ortsfesten Tankaufsatz (41) abdichtet. Die Gegenfläche der Gleitringdichtung (76) ist der Dichtbund (164) der Ventilausdrehung (163) der Abtriebswelle (151).

Der Kolbenschieber (71) des Schließventils (60) befindet sich bei einem ausgewechselten oder stillstehenden Einwechselaggregat in der in Figur 4 dargestellten Geschlossenstellung. An der Bohrung (47) steht kein Aerosoldruck an. Der Kolbenschieber (71) wird z.B. durch zwei Schraubendruckfedern (79) in dieser Stellung gehalten. Die Schraubendruckfedern (79) stützen sich an einem am Tankaufsatz (41) verschraubten Ventildeckel (49) ab.

Bei einem betriebsfertigen Einwechselaggregat ist der Tank (42) mit einer Schmier- und/oder Kühlflüssigkeit, z.B. einem synthetischen Esteröl und/oder einem Fettalkohol, im Folgenden Öl (2) genannt, befüllt. Da es sich bei der Minimalmengenschmierung in der Regel um eine Verlustschmierung handelt, wird der verwendete Schmierstoff oft hohen thermischen und mechanischen Belastungen ausgesetzt. Die Esteröle und Fettalkohole haben daher ein günstiges Verdampfungsverhalten und einen hohen Flammpunkt. Ihre Dämpfe sind zudem toxikologisch unbedenklich.

Das Schließventil (60) ist geschlossen, vgl. Figur 2. Im Verteilerzapfen (61) steht nur in den Bohrungen (64) und (62) Öl (2).

Nach dem Einwechseln des Einwechselaggregats in die Werkzeugmaschine wird beim Starten der Arbeitsspindelrotation das Aerosol (1) über das Aerosolanschlussrohr (137) in die zentrale Bohrung der Aggregatespindel (121) eingeleitet. Über die erste Gleitringdichtung (127) gelangt es in das Endstück (23) der Stufenbohrung (22). Von dort aus strömt das Aerosol (1) u.a. über die Bohrung (47) in den Ventilbereich (27) vor die Kolbenbodenseite des sich noch in Schließstellung befindenden Kolbenschiebers (71).

In der Folge bewegt sich der Kolbenschieber (71) entgegen der Wirkung der Schraubendruckfedern (79) nach unten, also in Richtung Werkzeug (180). Die Kolbenschieberbewegung ist beendet, wenn die Stirnfläche (77) den Dichtbund (164) der Abtriebswelle (151) dichtend kontaktiert. Wenn dies der Fall ist, überbrückt die Ventilausdrehung (75) die beiden Querbohrungen (62, 63), so dass das Öl (2) vor die Düse (69) fließt, vgl. Figur 2.

Gleichzeitig steht das Aerosol (1) über die Bohrung (46) in Aerosolraum (45) am Schwimmkolben (54) an, vgl. Figur 2, womit das Öl (2) im Ölraum (51) und in den nachgeschalteten Bohrungen bis hin zur Düse (69) unter Druck steht. Ggf. im Ölraum (51) und in den Bohrungen (56, 57, 62, 63, 64, 65) vorhandene Gasblasen werden vorab über die Düse (69) in die Mischkammer (165) entlüftet.

Während das Öl (2) mit Druck von der Düse (69) aus in die Mischkammer (165) zerstäubt wird, strömt über die außermittigen Bohrungen (66) das Aerosol (1) - vom Ventilbereich (27) kommend - in die Mischkammer (165), vgl. Figur 3. Dort mischt sich das zerstäubte Öl (2) und das Aerosol (1). Der Anteil des beigemengten Öls (2) im nun ölangereicherten Gemisch (3) hat einen Flüssigkeitsgewichtsanteil von einem bis zwei Dritteln. Das ölangereicherte Gemisch (3) schießt aus der Mischkammer (165), durchströmt die Wendelbohrungen (181) des Werkzeugs (180) und wird über die Öffnungen (183) im Bereich der Bohrerspitze (182) freigesetzt. An der Zerspanungsstelle des Werkstücks entfaltet das Gemisch seine schmierende und/oder kühlende Wirkung.

Die Minimalmengenschmierung ist auch auf mehrspindelige Einwechselaggregate übertragbar. Dort wird dann nur der aktive Werkzeughalter mit dem ölangereicherten Gemisch (3) versorgt.

### Bezugszeichenliste:

- 1: Flüssigkeits-Gasgemisch, Aerosol
- 2: Flüssigkeit, Öl, Schmier- und/oder Kühlflüssigkeit
- 3: Gemisch, flüssigkeitsangereichert

- 10: Gehäuse
- 11: Grundkörper
- 14: Rohrabschnitt
- 15: Flansch
- 16: Flanschring
- 17: Montagering
- 18: Abstützbolzen
- 19: Indexstift
- 21: Quaderabschnitt
- 22: Stufenbohrung
- 23: Endstück der Stufenbohrung
- 24: Bohrung, gestuft, vertikal im Quaderabschnitt
- 25: Bohrung, gestuft im Tankaufsatz
- 27: Ventilbereich
- 28: Deckelbereich

- 35: Stirnseite
- 36: Oberseite
- 37: Seitenwandung

- 41: Tankaufsatz
- 42: Tank, Behälter
- 45: Aerosolraum
- 46: Bohrung, aerosolführend zu (45)
- 47: Bohrung, aerosolführend zu (27)
- 49: Ventildeckel

- 51: Ölraum
- 52: Tankboden
- 53: Ringkanal
- 54: Schwimmkolben
- 55: Anschlagzapfen
- 56: Befüllbohrung, Flüssigkeitszuführleitung
- 57: Durchbruch, Flüssigkeitszuführleitung
- 58: Gewindestopfen
- 59: Schraubendruckfeder

- 60: Schließventil
- 61: Verteilerzapfen
- 62, 63: Querbohrungen
- 64, 65: Längsbohrungen
- 66: Bohrungen, außermittig
- 67: Querbohrungen zu (66)
- 68: Düsenelement
- 69: Düse

- 71: Kolbenschieber
- 72: Kolben
- 73: Anschlag
- 74: Schieberstange, hohl
- 75: Ausdrehung
- 76: Gleitringdichtung
- 77: Stirnfläche
- 79: Schraubendruckfedern

- 80: Öffnungsventil
- 81: Ventilglied
- 82: Schaftabschnitt
- 83: Kopfabschnitt
- 84: Stufenbohrung
- 85: Absatz, plan

- 86: Eindrehung
- 91: Abblasbohrung
- 92: Tellerfedern
- 93: Gewindestopfen
- 94: Durchdringungskontur
- 95: Bohrung, vertikal
- 96: Bohrung, horizontal

- 101: Tankdeckel
- 105: Ringdeckel

- 120: Getriebe, zweistufig
- 121: Aggregatespindel
- 122: Adapterkonus
- 123: Lagerwelle
- 124: Planrad
- 125: Mittellinie
- 126: Durchgangsbohrung
- 127: Gleitringdichtung
- 128: Anlagehülse
- 129: Zapfen

- 131: Schulterlager, groß
- 132: Schulterlager, klein
- 133: Distanzhülse
- 134: Distanzscheibe
- 135: Hohlschraube zwischen (123) und (124)
- 136: Hohlschraube zwischen (122) und (123)
- 137: Aerosolanschlussrohr
- 138: Schraubendruckfeder
- 139: Abdeckring

- 141: Zwischenwelle
- 142: Zwischenrad
- 143: Rillenkugellager

- 151: Abtriebswelle
- 152: Mittellinie
- 153: Abtriebsrad
- 154: Wellenmutter
- 155: Schulterlager
- 156: Passfeder

- 161: Bohrung, zentral
- 162: Gewindeabschnitt
- 163: Ventilausdrehung
- 164: Dichtbund, plan
- 165: Mischkammer
- 166: Bohrungsaufweitung

- 170: Werkzeughalter
- 171: Spannzange

- 180: Werkzeug, Spiralbohrer
- 181: Wendelbohrungen
- 182: Bohrerspitze
- 183: Öffnungen

## Patentansprüche

1. Einwechselaggregat mit mindestens einem in einem Gehäuse (10) gelagerten und über mindestens ein Getriebe (120) angetriebenen, werkzeugtragenden Werkzeughalter (170), wobei Teile (121, 124, 151) des Getriebes (120), Teile (151) des Werkzeughalters (170) und das Werkzeug (180) selbst Kanäle oder Bohrungen zum Transport eines unter Druck stehenden kühlenden und/oder schmierenden Flüssigkeits-Gasgemisches (1) aufweisen, und wobei das Flüssigkeits-Gasgemisch (1) dem Einwechselaggregat durch eine Flüssigkeits-Gasgemischzuleitung zugeführt wird,
**dadurch gekennzeichnet,**
- **dass** im oder vor dem Werkzeughalter (170) eine Mischkammer (165) oder eine Mischzone angeordnet ist, in die die Flüssigkeits-Gasgemischzuleitung mündet,
- **dass** im Gehäuse (10) ein mit Schmier- und/oder Kühlflüssigkeit (2) befüllter Behälter (42) angeordnet ist, dessen Flüssigkeitszuführleitungen (56, 57, 64, 62), die durch den Druck des Flüssigkeits-Gasgemisches (1) geöffnet werden können, in oder vor der Mischkammer (165) oder Mischzone enden.

2. Einwechselaggregat gemäß Anspruch 1, **dadurch gekennzeichnet, dass** das Getriebe (120) als Antriebswelle eine Aggregatespindel (121) hat, die eine flüssigkeits-gasgemischführende Durchgangsbohrung (126) hat.

3. Einwechselaggregat gemäß Anspruch 1, **dadurch gekennzeichnet, dass** die Abtriebswelle (151) des Getriebes (120) eine flüssigkeits-gasgemischführende Bohrung (161) hat.

4. Einwechselaggregat gemäß Anspruch 1, **dadurch gekennzeichnet, dass** die vor oder in der Mischkammer (165) eingepresste Schmier- und/oder Kühlflüssigkeit (2) ein Öl ist, dessen Viskosität zwischen 10 und 40 mm²/s liegt.

5. Einwechselaggregat gemäß Anspruch 1, **dadurch gekennzeichnet, dass** das Flüssigkeits-Gasgemisches (1) zu mindestens 90% aus Gas besteht und mit einem Druck von 5 ... 10 x 10⁵ N/mm² belastet ist.

6. Einwechselaggregat gemäß Anspruch 1, **dadurch gekennzeichnet, dass** im Behälter (42) ein Schwimmkolben (54) angeordnet ist, der den Behälterinnenraum in einen Aerosolraum (45) und in einen Ölraum (51) trennt, wobei in dem Aerosolraum (45) der Druck des Flüssigkeits-Gasgemisches (1) anliegt.

7. Einwechselaggregat gemäß Anspruch 1, **dadurch gekennzeichnet, dass** der Behälter (42) - bei ausgewechseltem oder abgeschaltetem Einwechselaggregat - mit einem Schließventil (60) verschlossen ist.

8. Einwechselaggregat gemäß Anspruch 6, **dadurch gekennzeichnet, dass** der Schwimmkolben (54) kurz vor oder bei einem Erreichen seiner entleerten Endlage ein Öffnungsventil (80) betätigt, das das in das Einwechselaggregat eingespeiste Flüssigkeits-Gasgemisch (1) - zum Absenken des überwachten Systemdrucks - in die Umgebung abbläst.

9. Einwechselaggregat gemäß Anspruch 1, **dadurch gekennzeichnet, dass** die Mittellinie der Mischkammer (165) deckungsgleich zur Mittellinie (152) des Werkzeugs (180) angeordnet ist und dass die Mischkammer (165) nur wenige Millimeter vor dem Werkzeug (180) positioniert ist.

10. Einwechselaggregat gemäß Anspruch 1, **dadurch gekennzeichnet, dass** die Flüssigkeitzuführleitung (56) auch eine Befüllbohrung ist.

11. Verfahren zur Minimalschmiermittelversorgung des oder der Werkzeuge eines Einwechselaggregats mit mindestens einem in einem Gehäuse (10) gelagerten und über mindestens ein Getriebe (120) angetriebenen, werkzeugtragenden Werkzeughalter (170), wobei Teile (121, 124, 151) des Getriebes,
Teile (151) des Werkzeughalters (170) und das Werkzeug (180) selbst Kanäle oder Bohrungen zum Transport eines unter Druck stehenden kühlenden und/oder schmierenden Flüssigkeits-Gasgemisches (1) aufweisen,
**dadurch gekennzeichnet,**
- **dass** dem Flüssigkeits-Gasgemisch (1) eine aus einem gehäuseeigenen Behälter (42) zur Verfügung gestellte Schmier- und/oder Kühlflüssigkeit (2) beigemengt wird, wobei der gesamte flüssige Anteil des dem Werkzeug (180) zugeführten Volumenstroms kleiner als 200 Milliliter pro Stunde ist.

12. Verfahren gemäß Anspruch 11, **dadurch gekennzeichnet, dass** das Beimengen der Schmier- und/oder Kühlflüssigkeit (2) unmittelbar vor den flüssigkeits-gasgemischführenden Bohrungen und/oder Kanäle (181) des Werkzeugs (180) erfolgt.

## Claims

1. An exchange unit comprising at least one tool-carrying tool holder (170) mounted in a housing (10) and driven through at least one transmission (120), with parts (121, 124, 151) of transmission (120), parts (151) of tool holder (170) and tool (180) itself having therein passages or bores for conveying a pressurized cooling and/or lubricating liquid-gas mixture (1), said liquid-gas mixture (1) being supplied to said exchange unit through a liquid-gas mixture conduit,
**characterized in that**
- a mixing chamber (165) or mixing zone is provided in or before tool holder (170), with the liquid-gas mixture conduit opening into said mixing chamber or mixing zone; and
- housing (10) has therein a container (42) filled with lubricating and/or cooling liquid (2), with the liquid supply lines (56, 57, 64, 62) opening into or in front of mixing chamber (165), and said liquid supply lines being opened by the pressure of liquid-gas mixture (1).

2. Exchange unit as claimed in claim 1, **characterized in that** transmission (120) is driven by a shaft in the form of a unit arbor (121) having a bore (126) therethrough which conducts a liquid-gas mixture.

3. Exchange unit as claimed in claim 1, **characterized in that** drive shaft (151) of transmission (120) has therethrough a bore (161) conducting a liquid-gas mixture.

4. Exchange unit as claimed in claim 1, **characterized in that** the lubricating and/or cooling liquid (2) pressed in in front of or inside mixing chamber (165) comprises an oil having a viscosity between 10 and 40 mm²/s.

5. Exchange unit as claimed in claim 1, **characterized in that** at least 90 % of liquid-gas mixture (1) consists of gas and **in that** said mixture is loaded to a pressure of 5 ... 10 x 10⁵ N/mm².

6. Exchange unit as claimed in claim 1, **characterized in that** container (42) has therein a floating piston (54) dividing the interior of the container into an aerosol space (45) and an oil space (51), with aerosol space (45) being loaded to the pressure of liquid-gas mixture (1).

7. Exchange unit as claimed in claim 1, **characterized in that** container (42) when exchanged or deactivated is sealed by means of a shut-off valve (60).

8. Exchange unit as claimed in claim 6, **characterized in that**, shortly before or when reaching its emptied end position, floating piston (54) actuates an opening valve (80) which blows off liquid-gas mixture (1) previously supplied to the exchange unit into the environment so as to lower the monitored system pressure.

9. Exchange unit as claimed in claim 1, **characterized in that** the center line of mixing chamber (165) is congruent with center line (152) of tool (180) and **in that** mixing chamber (165) is positioned a small number of millimeters in front of tool (180).

10. Exchange unit as claimed in claim 1, **characterized in that** liquid supply conduit (56) additionally acts as a filling hole.

11. A method of supplying minimum amounts of lubricant to the tool(s) of an exchange unit comprising at least one tool-carrying tool holder (170) mounted in a housing and driven via at least one transmission (120), with parts (121, 124, 151) of the transmission, parts (151) of tool holder (170) and tool (180) itself having therethrough passages or bores for conveying a pressurized cooling and/or lubricating liquid-gas mixture (1),
**characterized in that**
- liquid-gas mixture (1) has admixed thereto a lubricating and/or cooling liquid (2) provided from a container (42) associated with the housing, with the total amount of liquid of the volumetric flow supplied to tool (180) being less than 200 milliliters per hour.

12. Method as in claim 11, **characterized in that** the admixture of lubricating and/or cooling liquid (2) is effected just in front of said bores /and/or conduits (181) in tool (180) which conduct the liquid-gas mixture.

## Revendications

1. Groupe interchangeable muni d'au moins un porte-outils (170) équipé d'outils qui est placé dans un boîtier (10) et qui est entraîné par au moins une transmission (120), quelques uns des éléments (121, 124, 151) de la transmission (120), des éléments (151) du porte-outils (170) et l'outil même présentant des canaux ou des alésages pour le transport d'un mélange (1) liquide-gaz réfrigérant et/ou lubrifiant sous pression et le mélange liquide-gaz (1) étant amené vers le groupe interchangeable par l'intermédiaire d'une conduite d'amenée de liquide-gaz, **caractérisé en ce**
- **qu'**une chambre de mélange (165) ou une zone de mélange dans laquelle aboutit la conduite d'amenée du mélange liquide-gaz est disposée dans ou devant le porte-outil (170),
- **qu'**un récipient (42) qui est rempli de liquide réfrigérant et/ou lubrifiant (2) et dont les conduites d'amenée de liquide (56, 57, 64, 62) qui peuvent être ouvertes par la pression du mélange liquide-gaz (1) aboutissent dans ou devant la chambre (165) ou la zone de mélange, est disposé dans le boîtier (42).

2. Groupe interchangeable selon la revendication 1, **caractérisé en ce que** la transmission (120) a une broche (121) qui fait office d'arbre d'entraînement (121) et qui a un alésage de passage (126) acheminant du mélange liquide-gaz.

3. Groupe interchangéable selon la revendication 1, **caractérisé en ce que** l'arbre d'entraînement (151) de la transmission (120) a un alésage (161) acheminant du mélange liquide-gaz.

4. Groupe interchangéable selon la revendication 1, **caractérisé en ce que** liquide lubrifiant et/ou réfrigérant (2) qui est amené sous pression devant ou dans la chambre de mélange (165) est une huile d'une viscosité de 10-40 mm²/s.

5. Groupe interchangéable selon la revendication 1, **caractérisé en ce que** le mélange liquide-gaz (1) est composé au moins de 90 pour cent de gaz et soumis à une pression de 5...10 x 10⁵N/mm².

6. Groupe interchangéable selon la revendication 1, **caractérisé en ce qu'**un piston flottant (54) est placé dans le récipient (42) et que ce piston flottant divise l'intérieur du récipient en une chambre d'aérosol (45) et une chambre d'huile (51), la chambre d'aérosol étant assujettie à la pression du mélange liquide-gaz (1).

7. Groupe interchangéable selon la revendication 1, **caractérisé en ce que** le récipient (42) est fermé par une soupape de fermeture (60) lorsque le groupe interchangeable a été changé ou arrêté.

8. Groupe interchangéable selon la revendication 6, **caractérisé en ce que** le piston flottant (54), peu avant d'arriver ou en arrivant à sa position finale, actionne une soupape d'ouverture (80) qui lâche le mélange liquide-gaz (1), auparavant introduit dans le groupe interchangeable, à l'extérieur afin de faire baisser la pression surveillée du système.

9. Groupe interchangéable selon la revendication 1, **caractérisé en ce que** la ligne médiane de la chambre de mélange (165) est disposée en coïncidence avec la ligne médiane (152) positionnée à seulement quelques millimètres devant l'outil (180).

10. Groupe interchangeable selon la revendication 1, **caractérisé en ce que** la conduite d'amenée de liquide (56) est en même temps un orifice de remplissage.

11. Procédé de lubrification en quantité minimale de l'outil ou des outils d'un groupe interchangeable muni d'au moins un porte-outils (170) équipé d'outils qui est placé dans un boîtier (10) et qui est entraîné par au moins une transmission (120), quelques uns des éléments (121, 124, 151) de la transmission (120), des éléments (151) du porte-outils (170) et l'outil même présentant des canaux ou des alésages pour le transport d'un mélange (1) liquide-gaz réfrigérant et/ou lubrifiant sous pression, **caractérisé en ce**
- **qu'**un liquide lubrifiant et/ou réfrigérant (2) provenant d'un récipient (42), intégré dans le boîtier, est ajouté au mélange liquide-gaz (1), la totalité de la partie liquide du flux volumique acheminée
vers l'outil (180) étant inférieure à 200 millimètres par heure.

12. Procédé selon la revendication 11, **caractérisé en ce que** l'addition du liquide lubrifiant et/ou réfrigérant (2) s'effectue directement devant les alésages (181) et/ou les canaux (182) acheminant du mélange liquide-gaz de l'outil (180).
